# EUROPÄISCHE PATENTSCHRIFT

(11) **EP 2 293 646 B1**
(45) Veröffentlichungstag und Bekanntmachung des Hinweises auf die Patenterteilung: **25.05.2016**
(21) Anmeldenummer: 10008886.3
(22) Anmeldetag: 26.08.2010
(51) Int. Cl.: H05B 1/00, H05B 3/68, A47J 37/06

(54) **Gerät zur Zubereitung warmer Speisen**
Device for preparing warm meals
Appareil de préparation de plats chauds

(30) Priorität: 02.09.2009 DE 102009039662
(43) Veröffentlichungstag der Anmeldung: 09.03.2011
(73) Patentinhaber: Caspar Cloer GmbH & Co. KG, 59757 Arnsberg (DE)
(72) Erfinder: Cloer, Achim, 59755 Arnsberg (DE)
(74) Vertreter: Ksoll, Peter

(56) Entgegenhaltungen:
- EP-A1- 0 657 132
- EP-A1- 1 557 120
- DE-A1- 2 335 872
- FR-A1- 2 864 750
- US-A- 3 385 952

## Beschreibung

Die Erfindung betrifft ein Gerät zur Zubereitung warmer Speisen mit den Merkmalen im Oberbegriff von Patentanspruch 1.

Kleinere Küchengeräte zum Erwärmen von Speisen, wie z. B. Waffeleisen, sollen sowohl Platz sparend, leicht und handlich sein als auch bestmöglich thermisch isoliert sein. Die von einer Heizeinheit im Innern des Geräts erzeugte Wärme soll so effektiv wie möglich in die zu erwärmende Speise eingeleitet werden, wobei zwangsläufig eine gewisse Wärmemenge auch an das Gehäuse abgegeben wird. Damit man sich bei der Benutzung eines solchen Geräts nicht verbrennt, zumal nicht auszuschließen ist, dass es von unerfahrenen Personen und teils auch von Kindern benutzt wird, sollte die Gehäusetemperatur auch bei längerem Betrieb bestimmte Höchstwerte nicht überschreiten. Eine zusätzliche äußere Isolierung ist möglich, verändert jedoch das Design des Gerätes. Da die Geräte klein und kompakt sein sollen, ist nur sehr wenig Raum für eine innere Isolierung zwischen Heizplatte und Gehäuse.

Es ist durch die DE 2 335 872 A1 eine Speiseaufwärmevorrichtung bekannt geworden, dessen Tragkonstruktion über Gummidichtungsringe von einer Pfanne thermisch entkoppelt ist. In anderen Bereichen ist ein Luftspalt zur Wärmeisolierung vorhanden.

Zum Stand der Technik wird zusätzlich auf die US 3 385 952 A sowie die EP 1 557 120 A1 hingewiesen, welche ebenfalls Geräte zur Zubereitung warmer Speisen betreffen.

Ausgehend vom Stand der Technik liegt der Erfindung deshalb die Aufgabe zugrunde, ein Gerät aufzuzeigen, bei welchem der Wärmeeintrag in das Gehäuse minimiert wird und wobei die äußere Gestalt, d. h. das Design des Gehäuses, möglichst wenig beeinflusst wird.

Die Aufgabe wird durch ein Gerät mit den Merkmalen des Patentanspruchs 1 gelöst.

Vorteilhafte Ausgestaltungen des Erfindungsgedankens sind Gegenstand der abhängigen Ansprüche 2 bis 12.

Versuche haben gezeigt, dass bei derartigen Geräten vor allem der Übergang zwischen der heißen Heizplatte und dem Gehäuse kritisch ist, da vor allem hier und nicht - wie zu erwarten gewesen wäre - in der Nähe der Heizeinheit oder gleichmäßig über die gesamte Heizplatte der wesentliche Wärmeeintrag in das Gehäuse erfolgt.

Das Gerät zur Zubereitung warmer Speisen mittels wenigstens einer in einem Gehäuse des Gerätes angeordneten Heizplatte weist in der erfindungsgemäßen Ausgestaltung daher wenigstens ein zwischen der Heizplatte und dem Gehäuse angeordnetes Wärmeisolierelement auf, welches in einem von einer Wärmequelle der Heizplatte entfernten Randbereich des Gehäuses angeordnet ist. Mittels des Wärmeisolierelements werden Heizplatte und Gehäuse thermisch voneinander entkoppelt. Eine weitere Verbesserung der thermischen Entkopplung wird dadurch erreicht, dass zwischen dem Wärmeisolierelement und der Heizplatte bereichsweise ein Luftspalt vorhanden ist. Ebenso kann auch zwischen dem Gehäuse und dem Wärmeisolierelement bereichsweise ein Luftspalt vorhanden sein. Diese Luftspalte verhindern, dass das Wärmeisolierelement vollflächig an der Heizplatte und am Gehäuse anliegt, und isolieren zusätzlich. Vorteilhaft ist darüber hinaus, dass in den Bereichen des Luftspalts die Luft zirkulieren kann, so dass warme Luft aus dem Inneren des Gehäuses abströmen kann. Das wirkt einem Wärmestau entgegen.

Die Luftspalte erstrecken sich über eine gesamte Breite des Wärmeisolierelements, also von seiner äußeren Umfangsseite zur inneren Umfangsseite hin. Wenn sich der Luftspalt über die gesamte Breite des Wärmeisolierelements erstreckt, kann ein Luftaustausch zwischen dem Inneren und dem Äußeren des Gehäuses stattfinden. Das schließt nicht aus, dass einzelne Luftspaltbereiche sich über weniger als die gesamte Breite des Wärmeisolierelements erstrecken, also gewissermaßen Taschen bilden, die einen isolierenden Effekt haben, der aus der dort vorhandenen Luft resultiert.

Zwischen den Luftspalten ist das Wärmeisolierelement gegenüber der Heizplatte oder/und dem Gehäuse bevorzugt über stiftartige Vorsprünge abgestützt. Die Vorsprünge können beispielsweise zylinderförmig oder sich konisch verjüngend ausgebildet sein. Die stiftartige Gestalt der Vorsprünge minimiert den Kontaktbereich zwischen dem Wärmeisolierelement und den Heizplatten. Dadurch wird der Freiraum für den Luftspalt maximiert, was sich positiv auf den Isoliereffekt auswirkt.

Die Verbindung zwischen zwei benachbarten Vorsprüngen des Wärmeisolierelements ist in einer bevorzugten Ausführungsform bogenförmig ausgestaltet. Durch die Bogenform werden relativ kleine Kontaktbereiche am Ende eines jeden Bogens geschaffen. Diese endseitige Querschnittsfläche vergrößert sich mit zunehmendem Abstand von der Kontaktfläche, so dass eine sehr sichere Abstützung der Heizplatte auch im Bereich des Wärmeisolierelements gegeben ist. Durch die Bogenform erhält das Wärmeisolierelement eine hohe Widerstandsfähigkeit gegenüber mechanischen Belastungen, ist gleichzeitig relativ leicht und führt unter Ausnutzung der Luftspalte im Bereich der Bögen zu sehr guten Isoliereffekten. Eine gleichmäßige Abstützung der Heizplatten wird dadurch erreicht, dass der Abstand zwischen den Vorsprüngen über den Umfang des Gerätes bzw. des Gehäuses gleich bleibt.

Wie vorstehend erwähnt können die Luftspalte zusätzlich oder alternativ auch nur als umfangsseitige Vertiefungen im Wärmeisolierelement vorgesehen oder taschenartig mit vier oder fünf geschlossenen Seiten ausgestaltet sein. Beispielsweise können die Luftspalte auch die Form von Nuten haben, die sich parallel oder auch im Winkel, insbesondere im rechten Winkel, zur Heizplatte erstrecken.

Es handelt sich bei dem Wärmeisolierelement daher vorzugsweise um ein thermisches Wärmeisolierelement. Der Temperaturübergang, bezogen auf Wärmeleitung, wird durch das thermische Wärmeisolierelement verringert bzw. auf ein Mindestmaß unterbunden. Insbesondere bietet sich hierdurch der Vorteil, dass bereits auf dem Markt befindliche Elektrogeräte und neu eingeführte Elektrogeräte durch die thermischen Wärmeisolierelemente an gesetzliche Anforderungen angepasst werden können.

Bei dem Gerät handelt es sich insbesondere um ein Waffeleisen, einen SandwichMaker und/oder einen Kontaktgrill. Solche Elektrogeräte besitzen eine obere und eine untere Gehäusehälfte mit jeweiligen Heizplatten, die während des Backvorgangs aktiv oder über das Gewicht der oberen Gehäusehälfte gegeneinander gedrückt werden. Wenn aktiv Druck ausgeübt wird, wird die Kraft auch über den Gehäuserand auf die Heizplatten übertragen. Gerade in diesem Bereich kommt es zum Wärmeübergang, der durch das erfindungsgemäße Wärmeisolierelement vermindert wird. Das Wärmeisolierelement dient somit auch der Kraftübertragung und muss in gewissen Grenzen hinreichend druckfest sein. Das Wärmeisolierelement ist aber auch ohne diese während der Benutzung entstehende zusätzliche Belastung fest zwischen dem Gehäuse und der Heizplatte angeordnet, insbesondere geklemmt, da in der Praxis das Gehäuse mit der Heizplatte verschraubt ist.

Vorzugsweise ist das Wärmeisolierelement aus temperaturbeständigem Kunststoff hergestellt. Das Wärmeisolierelement kann einstückig ausgeführt oder aus mehreren Elementen zusammengesetzt sein. Darüber hinaus können die einzelnen Elemente auch aus verschiedenen Materialien bestehen. Das Wärmeisolierelement zur thermischen Entkopplung ist in seiner Breite vorzugsweise an die Gehäusewandstärke des Gehäuses angepasst. Es ist aber ebenso möglich, das Wärmeisolierelement schmaler oder breiter als eine Gehäusewandstärke des Gehäuses auszugestalten. Vorzugsweise steht das Wärmeisolierelement nicht oder zumindest nicht wesentlich über das Gehäuse nach außen vor, so dass sich der ästhetische Gesamteindruck des Gehäuses und damit des ganzen Gerätes nicht oder zumindest nicht erheblich ändert. Selbstverständlich ist es aber auch denkbar, das Wärmeisolierelement als konkretes Designelement einzusetzen und beispielsweise farblich oder auch hinsichtlich der räumlichen Gestalt vom Gehäuse abzusetzen.

In einer möglichen Ausführungsform kann das Wärmeisolierelement zumindest bereichsweise auch gegenüber einer Innenwand des Gehäuses nach innen hervorstehen. Hierbei kann zudem zwischen dem gegenüber der Innenwand des Gehäuses hervorstehenden Bereich des Wärmeisolierelements und der Innenwand des Gehäuses auch ein Dämmmaterial angeordnet sein, um das Gehäuse zusätzlich zu isolieren.

Darüber hinaus sind am Gehäuse oder/und an den Heizplatten Mittel vorgesehen, um das Wärmeisolierelement verrutschsicher anordnen zu können. Die Anordnung oder Befestigung des Wärmeisolierelements kann mittels Schrauben oder Verkleben erfolgen. Vorteilhaft ist auch eine formschlüssige Verbindung von Gehäusewand und Wärmeisolierelement oder/und der Rückseite der Heizplatte und dem Wärmeisolierelement.

Die Erfindung wird nachfolgend anhand mehrerer in den Figuren dargestellten Ausführungsbeispiele näher erläutert. Es zeigen:
- Figur 1: ein erfindungsgemäßes Gerät in perspektivischer Seitenansicht;
- Figur 2: eine Ausführungsform eines oberen Teils eines Wärmeisolierelementes;
- Figur 3: zu dem in Figur 2 dargestellten oberen Teil des Wärmeisolierelementes eine schematische Darstellung des unteren Teils des Wärmeisolierelementes und
- Figur 4: eine weitere Ausführungsform eines oberen Teils eines Wärmeisolierelementes.

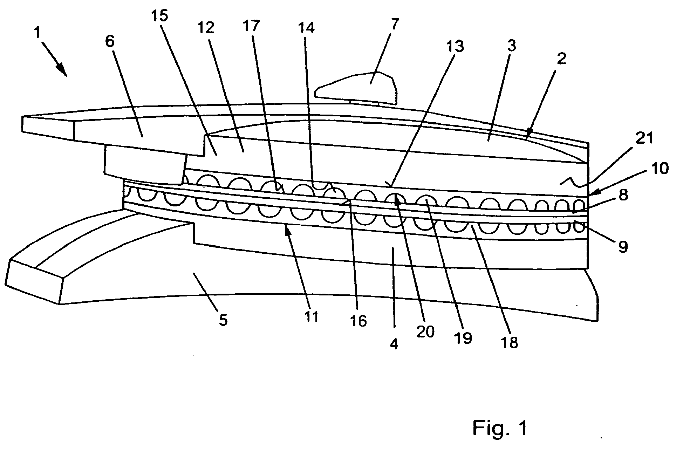

Das in Figur 1 dargestellte Ausführungsbeispiel für ein erfindungsgemäßes Gerät 1 zum Erwärmen von Speisen ist ein Waffeleisen. Es umfasst ein Gehäuse 2, welches sich aus einem oberen Gehäuseteil 3 und einem unteren Gehäuseteil 4 zusammensetzt. Der untere Gehäuseteil 4 ist mit einem Fuß 5 zum Aufstellen des Gerätes 1 verbunden. Am oberen Gehäuseteil 3 befindet sich ein Griff 6 zum Öffnen und Verschwenken des oberen Gehäuseteils 3 gegenüber dem unteren Gehäuseteil 4. Über eine Bedieneinheit 7 in Form eines Drehknaufs am Griff 6 können beispielsweise Temperatur oder Backzeit eingestellt werden.

Zwischen den beiden Gehäuseteilen 3, 4 sind zwei Heizplatten 8, 9 angeordnet: eine obere und eine untere Heizplatte 8, 9, zwischen welchen die Speisen erwärmt werden. Oberhalb bzw. unterhalb der Heizplatten 8, 9 sind - hier nicht dargestellt - elektrische Heizelemente zum Beheizen der Heizplatten 8, 9 innerhalb des jeweiligen Gehäuseteils 3, 4 angeordnet.

Im Kantenbereich der Gehäuseteile 3, 4, also dort, wo die Gehäuseteile 3, 4 und die Heizplatten 8, 9 den geringsten Abstand zueinander aufweisen, ist jeweils zwischen den Heizplatten 8, 9 und dem oberen bzw. unteren Gehäuseteil 3, 4 ein Wärmeisolierelement 11, 12 angeordnet.

Das Wärmeisolierelement 12 stützt sich dabei mit seiner oberen Seitenfläche 13 an einer Stirnfläche 14 einer Gehäusewand 15 ab. Mit einer unteren Seitenfläche 16 stützt sich das Wärmeisolierelement 11 auf einer Rückseite 17 der Heizplatte 8 ab. In gleicher Weise ist das Wärmeisolierelement 11 zwischen dem unteren Gehäuseteil 4 und der unteren Heizplatte 9 angeordnet.

In der hier dargestellten Ausführungsform weist die an der Heizplatte 8 abgestützte Seitenfläche 16 eine Aneinanderreihung gleichartiger Vorsprünge 18 auf, welche jeweils einen dazwischen liegenden Luftspalt 19 begrenzen. Jeweils zwei benachbarte Vorsprünge 18 sind in diesem Ausführungsbeispiel über einen bogenförmigen Bereich 20 verbunden. Das Wärmeisolierelement 11 mit den Vorsprüngen 18 erweckt den Eindruck einer Stirnverzahnung, wobei die Zahnlücken offen bleiben.

Der Luftspalt 19 kann sowohl von einer Außenseite 21 des Gehäuses 2 bis zu einer Innenseite des Gehäuses 2 durchgängig als eine Art Tunnel oder Durchlass ausgestaltet sein, wie es in Figur 1 dargestellt ist. Es ist aber ebenso möglich, den Luftspalt nur als eine Art Aussparung oder Tasche im Wärmeisolierelement 11, 12 vorzusehen, die nach radial außen hin offen ist.

Die Gestalt der Wärmeisolierelemente 11, 12 verringert den direkten Kontakt zwischen den Heizplatten 8, 9 und dem Gehäuse 2, wodurch ein Wärmeübergang zwischen Heizplatte 8, 9 und dem jeweiligen Gehäuseteil 3, 4 vermindert wird.

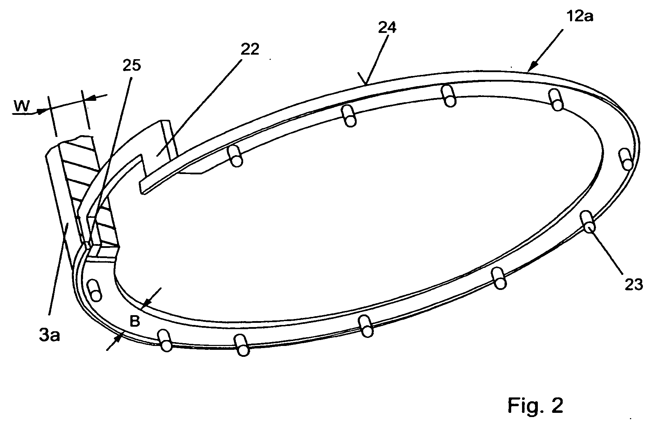

Figur 2 zeigt ein weiteres Ausführungsbeispiel für ein erfindungsgemäßes Wärmeisolierelement 12a, welches dafür vorgesehen ist, zwischen einem oberen, hier nur angedeuteten Gehäuseteil 3a und einer zu diesem Gehäuseteil 3a gehörenden Heizplatte angeordnet zu werden. Das Wärmeisolierelement 12a ist in dieser Ausführung kreisringförmig ausgestaltet. Das Wärmeisolierelement 12a weist eine Unterbrechung für eine hier nicht näher dargestellte gelenkige Kopplung der Gehäuseteile auf, wobei die benachbarten Enden des Wärmeisolierelements 12a mittels einer Art Brückenelement 22 zur Überbrückung der Koppelstelle verbunden sind. Dieses Überbrückungselement ist in dieser Ausführung U-förmig ausgestaltet.

Es ist bei anderen Gehäuseformen natürlich auch möglich, von der Kreisringform abweichende Geometrien zu wählen. Es gibt z. B. eckige oder ovale Geräte, z. B. Sandwichmaker, Brüsseler Waffeleisen bzw. doppelte Waffeleisen. Prinzipiell folgt die Geometrie des Wärmeisolierelements der Form des Gehäuses.

Das Wärmeisolierelement 12a weist ebenfalls Vorsprünge 23 auf, mit denen es sich an einer zum Gehäuse weisenden Seite einer Heizplatte abstützt. Die stiftförmigen Vorsprünge 23 sind zylindrisch ausgebildet. Das Wärmeisolierelement 12a weist einen an seiner äußeren Umfangsseite 24 angeordneten Kragen 25 auf. Der Kragen 25 ist dafür vorgesehen, im geschlossenen Zustand des Gerätes die nach außen weisenden Kanten der Heizplatten abzudecken. Somit werden nicht nur das Gehäuse und die Heizplatten voneinander thermisch entkoppelt, sondern auch die im Betrieb heißen, nach außen weisenden Kanten der Heizplatten zumindest teilweise bedeckt.

Das Wärmeisolierelement 12a weist ohne Kragen 25 eine wenigstens einer Gehäusewandstärke W des Gehäuseteils 3a entsprechende Breite B auf.

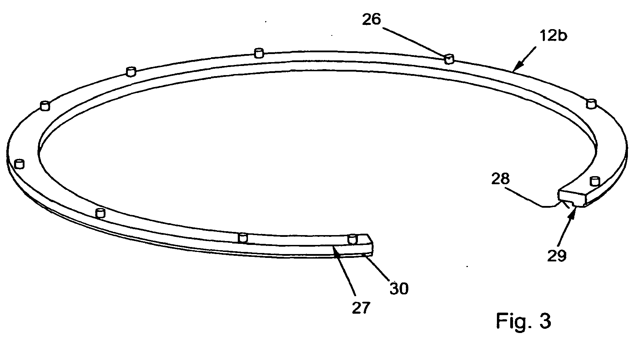

Figur 3 zeigt eine weitere alternative Ausgestaltung eines Wärmeisolierelements 12b. Hier sind die Vorsprünge 26 im äußersten Randbereich 27 des kreisringförmig ausgestalteten Wärmeisolierelements 12b angeordnet, um eine bestmögliche Entkopplung von Gehäuse und Heizplatten zu erzielen. An der zu der Gehäusehälfte weisenden unteren Seitenfläche 28 des Wärmeisolierelements 12b ist eine umlaufende, im Querschnitt rechteckige Erhöhung 29 angeordnet, welche mit ihrer äußeren Seitenfläche 30 an einer Innenseite des Gehäuseteils anliegt. Dadurch wird der formschlüssige Sitz des Wärmeisolierelements 12b zwischen Heizplatte und Gehäuse gewährleistet.

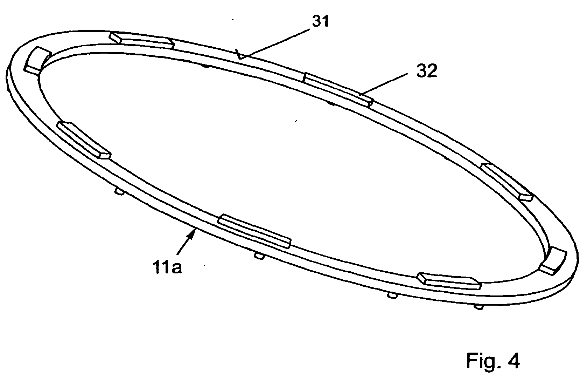

Alternativ zu der in Figur 3 dargestellten Erhöhung 29 können, wie in Figur 4. dargestellt, auch einzelne gegenüber der oberen Seitenfläche 31 erhabene Blöcke 32 zur Lagesicherung in einer Einbaulage eingesetzt werden. Dies hat den Vorteil, dass somit sowohl zwischen der Rückseite der Heizplatte und dem Wärmeisolierelement 11 a als auch zwischen einer Gehäusehälfte und dem Wärmeisolierelement 11a Luftspalte zur Isolierung vorhanden sind.

### Bezugszeichen:

- 1 -: Gerät
- 2 -: Gehäuse
- 3 -: oberes Gehäuseteil
3a - oberes Gehäuseteil
- 4 -: unteres Gehäuseteil
- 5 -: Fuß
- 6 -: Griff
- 7 -: Bedieneinheit
- 8 -: obere Heizplatte
- 9 -: untere Heizplatte
- 10 -: Kantenbereich
- 11 -: Wärmeisolierelement
11a - Wärmeisolierelement
- 12 -: Wärmeisolierelement
12a - Wärmeisolierelement
12b - Wärmeisolierelement
- 13 -: Seitenfläche
- 14 -: Stirnfläche
- 15 -: Gehäusewand
- 16 -: Seitenfläche
- 17 -: Rückseite
- 18 -: Vorsprung
- 19 -: Luftspalt
- 20 -: Bereich zwischen 18
- 21 -: Außenseite
- 22 -: Überbrückungselement
- 23 -: Vorsprung
- 24 -: äußere Umfangsseite
- 25 -: Kragen
- 26 -: Vorsprung
- 27 -: äußerer Randbereich
- 28 -: Seitenfläche
- 29 -: Erhöhung
- 30 -: Seitenfläche
- 31 -: Seitenfläche
- 32 -: Blöcke

- B -: Breite
- W -: Gehäusewandstärke

## Patentansprüche

1. Gerät zur Zubereitung warmer Speisen mittels wenigstens einer in einem Gehäuse (2) angeordneten Heizplatte (8, 9), wobei zwischen der Heizplatte (8, 9) und dem Gehäuse (2) ein Isolierelement (11, 11a, 12, 12a, 12b) angeordnet ist, das in einem von einer Wärmequelle der Heizplatte (8, 9) entfernten Randbereich des Gehäuses (2) angeordnet ist, wobei zwischen dem Wärmeisolierelement (11, 11a, 12, 12a, 12b) und der Heizplatte (8, 9) bereichsweise ein Luftspalt (19) vorhanden ist und/oder dass zwischen dem Wärmeisolierelement (11, 11 a, 12, 12a, 12b) und dem Gehäuse (2) bereichsweise ein Luftspalt (19) vorhanden ist, **dadurch gekennzeichnet, dass** der Luftspalt (19) sich von einer äußeren Umfangsseite des Geräts erstreckt.

2. Gerät nach Anspruch 1, **dadurch gekennzeichnet, dass** sich ein oder mehrere Luftspalte (19) über eine gesamte Breite (B) des Wärmeisolierelements (11, 11 a, 12, 12a, 12b) erstreckt.

3. Gerät nach Anspruch 1 oder 2, **dadurch gekennzeichnet, dass** das Wärmeisolierelement (11, 11a, 12, 12a, 12b) stiftartige Vorsprünge (18, 23, 26) im Bereich der Luftspalte (19) aufweist, mittels derer das Wärmeisolierelement (11, 11a, 12, 12a, 12b) gegenüber der Heizplatte (8, 9) oder/und dem Gehäuse (2) abgestützt ist.

4. Gerät nach Anspruch 3, **dadurch gekennzeichnet, dass** das Wärmeisolierelement (11, 11a, 12, 12a, 12b) zwischen zwei benachbarten Vorsprüngen (18) bogenförmig ausgestaltet ist.

5. Gerät nach Anspruch 4, **dadurch gekennzeichnet, dass** die Breite (B) des Wärmeisolierelements (11, 11a, 12, 12a, 12b) breiter als eine Gehäusewandstärke (W) des Gehäuses (2) ist.

6. Gerät nach Anspruch 5, **dadurch gekennzeichnet, dass** das Wärmeisolierelement (11, 11a, 12, 12a, 12b) aus temperaturbeständigem Kunststoff besteht.

7. Gerät nach Anspruch 6, **dadurch gekennzeichnet, dass** eine äußere Kontur des Wärmeisolierelements (11, 11a, 12, 12a, 12b) einer umfangsseitigen Kontur der Heizplatten (8, 9) entspricht.

8. Gerät nach Anspruch 7, **dadurch gekennzeichnet, dass** eine äußere Kontur des Wärmeisolierelements (11, 11a, 12, 12a, 12b) einer umfangsseitigen Kontur des Gehäuses (2) entspricht.

9. Gerät nach Anspruch 8, **dadurch gekennzeichnet, dass** das Wärmeisolierelement (11, 11a, 12, 12a, 12b) mehrteilig ausgeführt ist.

10. Gerät nach Anspruch 9, **dadurch gekennzeichnet, dass** das Wärmeisolierelement (11, 11a, 12, 12a, 12b) zumindest bereichsweise gegenüber einer Innenwand des Gehäuses nach innen hervorsteht.

11. Gerät nach Anspruch 10, **dadurch gekennzeichnet, dass** zwischen einem gegenüber der Innenwand des Gehäuses hervorstehenden Bereich des Wärmeisolierelements (11, 11a, 12, 12a, 12b) und der Innenwand des Gehäuses Dämmmaterial angeordnet ist.

12. Gerät nach einem der Ansprüche 1 bis 11, **dadurch gekennzeichnet, dass** an den Heizplatten (8, 9) und/oder am Gehäuse (2) Mittel zum Befestigen des Wärmeisolierelements (11, 11 a, 12, 12a, 12b) vorgesehen sind.

## Claims

1. Device for preparing hot food by means of at least one hotplate (8, 9) arranged in a housing (2), whereinbetween the hotplate (8, 9) and the housing (2)is arrangedan insulating element (11, 11a, 12, 12a, 12b),which is arranged in an edge region of the housing (2) remote from a heat source of the hotplate (8, 9), an air gap (19) being provided in parts between the heat insulating element (11, 11a, 12, 12a, 12b) and the hotplate (8, 9), and/or an air gap (19) being provided in parts between the heat insulating element (11, 11a, 12, 12a, 12b) and the housing (2), **characterised in that** the air gap (19) extends from an outer circumferential side of the device.

2. Device according to claim 1, **characterised in that** one or more air gaps (19) extends or extend over the full width (B) of the heat insulating element (11, 11a, 12, 12a, 12b).

3. Device according to claim 1 or 2, **characterised in that** the heat insulating element (11, 11a, 12, 12a, 12b) comprises stud-like projections (18, 23, 26) in the region of the air gaps (19), by means of which the heat insulating element (11, 11a, 12, 12a, 12b) is supported relative to the hotplate (8, 9) and/or the housing (2).

4. Device according to claim 3, **characterised in that** the heat insulating element (11, 11 a, 12, 12a, 12b) is configured in the shape of an arc between two adjacent projections.

5. Device according to claim 4, **characterised in that** the width (B) of the heat insulating element (11, 11a, 12, 12a, 12b) is greater than a wall thickness (W) of the housing (2).

6. Device according to claim 5, **characterised in that** the heat insulating element (11, 11 a, 12, 12a, 12b) consists of temperature-resistant plastics.

7. Device according to claim 6, **characterised in that** an outer contour of the heat insulating element (11, 11 a, 12, 12a, 12b) corresponds to a circumferential contour of the hotplates (8, 9).

8. Device according to claim 7, **characterised in that** an outer contour of the heat insulating element (11, 11 a, 12, 12a, 12b) corresponds to a circumferential contour of the housing (2).

9. Device according to claim 8, **characterised in that** the heat insulating element (11, 11 a, 12, 12a, 12b) is constructed in several parts.

10. Device according to claim 9, **characterised in that** the heat insulating element (11, 11 a, 12, 12a, 12b) projects inwardly at least in parts relative to an inner wall of the housing.

11. Device according to claim 10, **characterised in that** insulating material is arranged between the inner wall of the housing and a region of the heat insulating element (11, 11 a, 12, 12a, 12b) projecting relative to the inner wall of the housing.

12. Device according to one of claims 1 to 11, **characterised in that** means for securing the heat insulating element (11, 11a, 12, 12a, 12b) are provided on the hotplates (8, 9) and/or on the housing (2).

## Revendications

1. Appareil pour préparer des plats chauds au moyen d'au moins une plaque chauffante (8, 9) agencée dans une coque (2), un élément isolant (11, 11a, 12, 12a, 12b) étant agencé entre la plaque chauffante (8, 9) et la coque (2), lequel élément isolant étant agencé dans une zone de bord, éloignée d'une source de chaleur de la plaque chauffante (8, 9), de la coque (2), une fente d'aération (19) étant présente par endroits entre l'élément isolant thermique (11, 11a, 12, 12a, 12b) et la plaque chauffante (8, 9) et/ou une fente d'aération (19) étant présente par endroits entre l'élément isolant thermique (11, 11a, 12, 12a, 12b) et la coque (2), **caractérisé en ce que** la fente d'aération (19) s'étend à partir d'un côté périphérique extérieur de l'appareil.

2. Appareil selon la revendication 1, **caractérisé en ce qu'**une ou plusieurs fentes d'aération (19) s'étendent sur une largeur totale (B) de l'élément isolant thermique (11, 11a, 12, 12a, 12b).

3. Appareil selon la revendication 1 ou 2, **caractérisé en ce que** l'élément isolant thermique (11, 11a, 12, 12a, 12b) comporte dans la zone de la fente d'aération (19) des parties en saillie du type broches (18, 23, 26) au moyen desquelles l'élément isolant thermique (11, 11a, 12, 12a, 12b) est soutenu par rapport à la plaque chauffante (8, 9) ou/et à la coque (2).

4. Appareil selon la revendication 3, **caractérisé en ce que** l'élément isolant thermique (11, 11a, 12, 12a, 12b) est conçu en forme d'arc entre deux parties en saillie (18) voisines.

5. Appareil selon la revendication 4, **caractérisé en ce que** la largeur (B) de l'élément isolant thermique (11, 11a, 12, 12a, 12b) est plus grande qu'une épaisseur de paroi de coque (W) de la coque (2).

6. Appareil selon la revendication 5, **caractérisé en ce que** l'élément isolant thermique (11, 11a, 12, 12a, 12b) est en une matière plastique résistante à la température.

7. Appareil selon la revendication 6, **caractérisé en ce qu'**un contour extérieur de l'élément isolant thermique (11, 11a, 12, 12a, 12b) correspond à un contour périphérique des plaques chauffantes (8, 9).

8. Appareil selon la revendication 7, **caractérisé en ce qu'**un contour extérieur de l'élément isolant thermique (11, 11a, 12, 12a, 12b) correspond à un contour périphérique de la coque (2).

9. Appareil selon la revendication 8, **caractérisé en ce que** l'élément isolant thermique (11, 11a, 12, 12a, 12b) est réalisé en plusieurs parties.

10. Appareil selon la revendication 9, **caractérisé en ce que** l'élément isolant thermique (11, 11a, 12, 12a, 12b) dépasse vers l'intérieur au moins par endroits par rapport à une paroi intérieure de la coque.

11. Appareil selon la revendication 10, **caractérisé en ce qu'**un matériau isolant est agencé entre une zone, dépassant par rapport à la paroi intérieure de la coque, de l'élément isolant thermique (11, 11a, 12, 12a, 12b) et la paroi intérieure de la coque.

12. Appareil selon l'une des revendications 1 à 11, **caractérisé en ce que** des moyens pour fixer l'élément isolant thermique (11, 11a, 12, 12a, 12b) sont prévus sur les plaques chauffantes (8, 9) et/ou sur la coque (2).
